# EUROPÄISCHE PATENTSCHRIFT

(11) **EP 1 657 478 B1**
(45) Veröffentlichungstag und Bekanntmachung des Hinweises auf die Patenterteilung: **26.11.2014**
(21) Anmeldenummer: 05022976.4
(22) Anmeldetag: 21.10.2005
(51) Int. Cl.: F16L 23/16, F16J 15/06, H01R 13/52

(54) **Fixierbare Flanschdichtung**
Fixable flange seal
Joint d'étanchéité fixable pour raccord à brides

(30) Priorität: 12.11.2004 DE 202004017562 U
(43) Veröffentlichungstag der Anmeldung: 17.05.2006
(73) Patentinhaber: Harting Electric GmbH & Co. KG, 32339 Espelkamp (DE)
(72) Erfinder: Meier, Heiko, 32425 Minden (DE); Olejarz, Klaus, 32584 Löhne (DE); Quast, Frank, 33611 Bielefeld (DE); Schmidt, Martin, 32312 Lübbecke (DE)

(56) Entgegenhaltungen:
- EP-A- 0 579 396
- WO-A-89/08212
- DE-A1- 19 724 802
- DE-C1- 10 100 934

## Beschreibung

Die Erfindung betrifft eine Vorrichtung aus einer fixierbaren Flanschdichtung und einem mit einem Flansch versehenen Gehäuse zur Montage an einem Wandausschnitt oder einem Anschlussflansch eines entsprechenden, weiteren Anschlussgehäuses, nach dem Oberbegriff des Anspruchs 1.

Derartige Vorrichtungen werden benötigt, um ein mit einem Flansch versehenes Gehäuse oder ähnliches in jeder beliebigen Einbaulage zu montieren, ohne dass die dazu erforderlichen Befestigungsschrauben aus den dazu vorgesehenen Befestigungsöffnungen herausfallen.

Flanschdichtungen sind in der Regel derartig ausgeformt, dass sie passgenau für den jeweiligen Flansch zugeschnitten sind, wobei die Öffnungen für die Befestigungsschrauben denen des Flansches entsprechen, so dass die Befestigungsschrauben zur festen Verbindung der Flansche mühelos durch diese Öffnungen durchgeschoben werden können.
Damit wird aber eine Montage in beliebiger Einbaulage zu einem schwierigen Unterfangen, da häufig der anzuflanschende Gegenstand, die Flanschdichtung sowie die Befestigungsschrauben irgendwie gehalten und verschraubt werden müssen.

In der DE 101 00 934 C1 ist eine Anordnung zur gasdichten Befestigung eines einen Verbindungsftansch aufweisenden Ansaugkrümmers am Zylinderkopf einer Verbrennungsmaschine gezeigt. Dabei sind Verbindungsmittel vorgesehen, die eine mechanische Entkopplung zwischen der Dichtungsplatte und dem Ansaugkrümmer bewirken, um die Übertragung von Schwingungen zu mindern. Der Oberbegriff des Anspruchs 1 ist aus dieser Schrift bekannt.

Aus der WO 89/08212 ist ein Flanschabdichtungssystem bekannt, bei dem an einem Flansch angeformte Kragen komplett durch die Bohrung eines anzuflanschenden Gehäuses geführt sind und dort mittels einer T-förmigen Hülse umgebogen werden. Die Hülse reicht bis auf den Grundkörper auf den das anzuflanschende Gehäuse aufgesetzt wird. Durch diese Hülse wird eine Befestigungsschraube zum Fixieren des Gehäuses geführt, wobei die Länge der Hülse Einfluss auf den Anpressdruck der Flanschdichtung hat.

Und aus der EP 0 579 396 A1 ist ein läminierter Flansch für eine Zylinderkopfdichtung beschrieben, der aus zwei Metallplatten gebildet ist, wobei die eine Metallplatte Öffnungen aufweist, in die passende Öffnungen mit einem umgebenden Kragen der zweiten Metallplatte eingefügt sind, und wobei die jetzt gebildete zentrale Öffnung einen verengten Durchmesser aufweisen, weil der Kragen am inneren Rand eine Einschnürung aufweist.

Der Erfindung liegt daher die Aufgabe zugrunde, eine Vorrichtung aus einer fixierbaren Flanschdichtung und einem mit einem Flansch versehenen Gehäuses der eingangs genannten Art dahingehend auszubilden, dass in Offnungen der Flanschdichtung gehaltene Befestigungsschrauben eine vereinfachte Montage ermöglichen.

Diese Aufgabe wird durch die kennzeichnenden Merkmale des Anspruchs 1 gelöst.

Eine vorteilhafte Ausgestaltung der Erfindung ist im Anspruch 2 angegeben.

Die mit der Erfindung erzielten Vorteile bestehen insbesondere darin, dass die Flanschdichtung mit den bereits vormontierten Befestigungsschrauben mit dem Gehäuse eine Einheit bilden und somit in jeder beliebigen Montage- oder Einbaulage montierbar ist, ohne dass die Befestigungsschrauben selbst bei einer Über-Kopf-Montage aus den Befestigungsöffnungen des Flansches herausfallen.
Dabei sind an den, mit den Befestigungsöffnungen im Flansch übereinstimmenden Öffnungen, aus der Materialebene der Flanschdichtung heraus angeformte Kragen vorgesehen, in denen die Befestigungsschrauben vorteilhafterweise einsetzbar sind.
Weiterhin ist von Vorteil, dass an der Innenwandung des Kragens mindestens eine Dichtlippe vorgesehen ist, so dass die Befestigungsschraube gegen ein Herausfallen gesichert ist.
Für den jeweiligen Kragen der Flanschdichtung ist in der entsprechenden Befestigungsöffnung ein angepasster vergrößerter Durchmesser vorgesehen, so dass die Flanschdichtung vorteilhafterweise bereits beim Anfügen an den Flansch mittels der hervorstehenden Kragen in den Befestigungsöffnungen gehalten wird. Weiterhin ist vorgesehen, die Flanschdichtung als Spritzteil zu fertigen, so dass eine optimale Materialverwendung erfolgt.
Da Schrauben und Flanschdichtung am Flansch des hier weiter beschriebenen Steckverbindergehäuses fixiert sind, ist somit eine wesentliche Erleichterung und Vereinfachung bei der Montage eines derartigen Gehäuses mit einem entsprechenden Anschlussgehäuse gegeben.

Ein Ausführungsbeispiel der Erfindung ist in der Zeichnung dargestellt und wird im folgenden näher erläutert. Es zeigen:
- Fig. 1: eine perspektivische Darstellung eines Flanschgehäuses für einen Steckverbinder mit einer davon beabstandeten Flanschdichtung,
- Fig. 2: eine perspektivische Darstellung einer Flanschdichtung mit einem davon beabstandeten Flanschgehäuse, und
- Fig. 3: eine Schnittdarstellung einer Befestigungsöffnung in einem Flanschgehäuse mit einer darin angeordneten Befestigungsschraube.

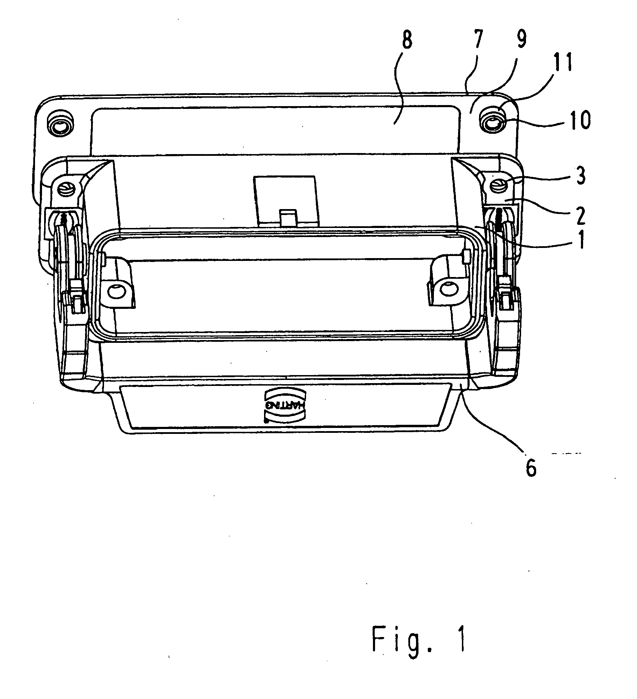

In der Fig.1 ist in einer perspektivischen Darstellung ein für einen Steckverbinder ausgebildetes Gehäuse 1 mit einem Flansch 2 mit Sicht auf die offene Steckseite des Steckverbinders gezeigt.
Aus dieser Sichtweite ist hinter dem Gehäuse 1 angeordnet, eine Flanschdichtung 7 ersichtlich, mittels der eine umweltdichte Verbindung zu einem hier nicht weiter gezeigten Gehäuse oder an einen weiteren Flansch erfolgt. Dabei sind an der Flanschdichtung 7 neben dem Ausschnitt 8 für die aus dem Steckverbinder herauszuführenden Verbindungskabel, die Öffnungen 10 für Befestigungsschrauben erkennbar, die jeweils von einem Kragen 11 umgeben sind, der sich aus der Materialebene 9 der Flanschdichtung 7 erhebt.
Weiterhin ist ein Bügel 6 ersichtlich, der eine lösbare Fixierung mit einem hier nicht weiter gezeigten Gegenstecker ermöglicht.

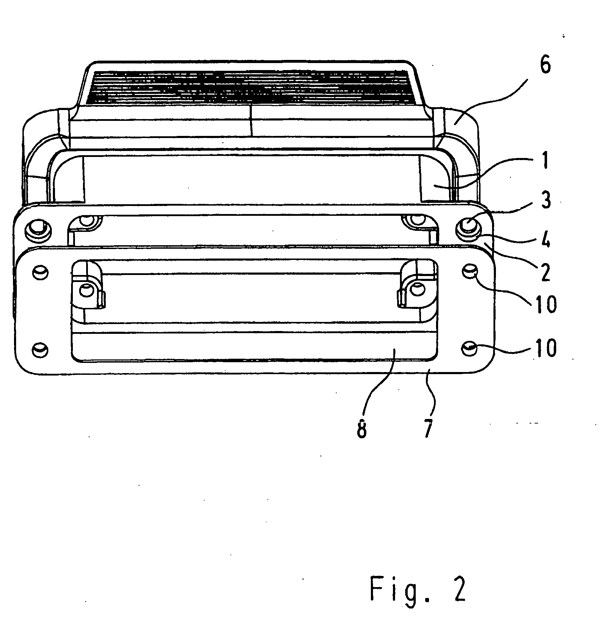

In Fig. 2 ist ebenfalls in einer perspektivischen Darstellung, die gegenüber der Fig. 1 entgegengesetzte Seite der Flanschdichtung 7 und des Gehäuses 1 gezeigt.
Dabei sind deutlich der Ausschnitt 8 sowie die Anordnung der Öffnungen 10 in der Flanschdichtung 7 erkennbar.

An dem Flansch 2 des Gehäuses ist in der Befestigungsöffnung 3 für die Befestigungsschrauben ein im Durchmesser vergrößerter Bereich 4 vorgesehen, in den hinein der Kragen 11 der Flanschdichtung 7 hineinragt. Dabei ist der Durchmesser der Öffnung 4 und des Kragens 11 so bemessen, dass die Flanschdichtung mit dem Einsetzen der Kragen in die Öffnungen 4 bereits am Flansch fixiert ist.

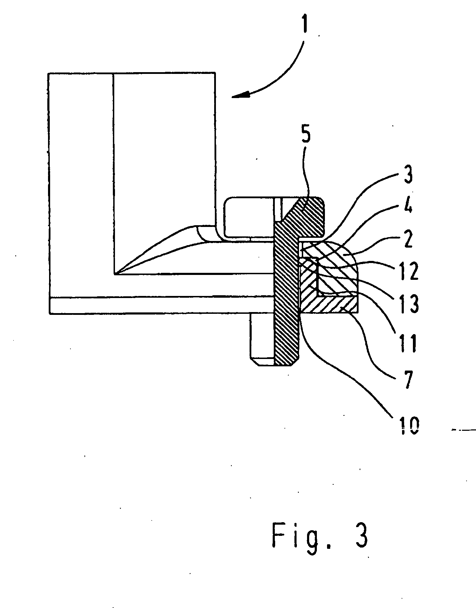

In der Fig. 3 ist ein vergrößerter Teilschnitt durch eine der Befestigungsöffnungen 3 im Flansch 2 dargestellt, in der zudem eine Befestigungsschraube 5 eingefügt ist.
Dabei ist die Flanschdichtung 7 passgenau an den Flansch 2 des Gehäuses 1 angelegt, wobei der an der Flanschdichtung angeformte Kragen 11 im vergrößerten Bereich 4 der Befestigungsöffnung 3 des Flansches eintaucht. Dieser vergrößerte Bereich 4 ist für eine derartig ausgebildete Flanschdichtung zwingend erforderlich.
Wie aus der Fig. 3 weiterhin zu entnehmen ist, legt sich die am Kragenende 12 angeformte, innenliegende Dichtlippe 13 eng an den Schaft der Befestigungsschraube 5 an, so dass ein Herausfallen der Befestigungsschraube verhindert und gleichzeitig eine Abdichtung geschaffen wird.

## Patentansprüche

1. Vorrichtung aus einer fixierbaren Flanschdichtung (7) und einem mit einem Flansch (2) versehenen Gehäuse (1) zur Montage an einem Wandausschnitt oder einem Anschlussflansch eines entsprechenden, weiteren Anschlussgehäuses,
wobei die Flanschdichtung (7) eine Materialebene (9) aufweist, aus der mehrere angeformte Kragen (11) herausragen, in denen jeweils eine Öffnung (10) vorgesehen ist,
der Flansch (2) Befestigungsöffnungen (3) aufweist, die mit den herausragenden Kragen (11) korrelieren,
der Flansch (2) innerhalb der Befestigungsöffnungen (3) einen im Durchmesser vergrößerten Bereich (4) aufweist, in den die Kragen (11) hineinragen,
jeweils eine durch die Befestigungsöffnung (3) und die im Kragen (11) vorgesehene Öffnung (10) hindurchgeführte Befestigungsschraube (5) innerhalb des Kragens (11) und somit im Flansch (2) gehalten wird, **dadurch gekennzeichnet,**
**dass** der Außendurchmesser des jeweiligen Kragens (11) gegenüber dem Innenduchmesser des jeweiligen vergrößerten Bereiches (4) in den Befestigungsöffnungen (3) so bemessen ist, dass die Flanschdichtung (7) am Flansch (2) passgenau gehalten ist.

2. Vorrichtung nach Anspruch 1, **dadurch gekennzeichnet,**
**dass** am Kragenende (12) des aus der Flanschdichtung (7) herausragenden Kragens (11) eine Dichtlippe (13) angeformt ist.

## Claims

1. A device comprised of a fixable flange gasket (7) and a housing (1) provided with a flange (2) for mounting to a wall cutout or a connecting flange of a corresponding further connecting housing,
the flange gasket (7) having a material plane (9) from which a plurality of integrally formed collars (11) protrude, each of which has an opening (10) provided therein,
the flange (2) having fastening openings (3) correlating with the protruding collars (11),
the flange (2) having an enlarged diameter portion (4) inside the fastening openings (3), the collars (11) protruding into the portion (4),
a respective fastening bolt (5) each, guided through the fastening opening (3) and the opening (10) provided in the collar (11), being held inside the collar (11) and thus in the flange (2),
**characterized in that**
the outside diameter of the respective collar (11), compared with the inside diameter of the respective enlarged portion (4) in the fastening openings (3), is dimensioned such that the flange gasket (7) is held on the flange (2) with a precise fit.

2. The device according to claim 1, **characterized in that**
a sealing lip (13) is integrally formed with the collar end (12) of the collar (11) protruding from the flange gasket (7).

## Revendications

1. Dispositif composé d'un joint de bride (7) fixable et d'un boîtier (1) pourvu d'une bride (2) pour le montage sur une découpe de paroi ou une bride de raccordement d'un autre boîtier de raccordement correspondant,
le joint de bride (7) présentant un plan de matière (9) hors duquel plusieurs collerettes (11) conformées avec celui-ci et dans chacune desquelles il est prévu un orifice (10) font saillie,
la bride (2) présentant des orifices de fixation (3) en corrélation avec les collerettes (11) en saillie,
la bride (2) présentant à l'intérieur des orifices de fixation (3) une zone (4) avec un diamètre agrandi dans laquelle les collerettes (11) font saillie,
une vis de fixation (5) guidée à travers l'orifice de fixation (3) et l'orifice (10) prévu dans la collerette (11) étant respectivement retenue à l'intérieur de la collerette (11) et ainsi dans la bride (2),
**caractérisé en ce que**
par rapport au diamètre intérieur de la zone agrandie (4) respective dans les orifices de fixation (3), le diamètre extérieur de la collerette (11) respective est dimensionné de telle sorte que le joint de bride (7) est maintenu sur la bride (2) avec un ajustage précis.

2. Dispositif selon la revendication 1, **caractérisé en ce que**
une lèvre d'étanchéité (13) est conformée à l'extrémité de collerette (12) de la collerette (11) qui fait saillie hors du joint de bride (7).
